# EUROPEAN PATENT APPLICATION

(11) **EP 3 952 358 A1**
(43) Date of publication of application: **09.02.2022**
(21) Application number: 20305918.3
(22) Date of filing: 07.08.2020
(51) Int. Cl.: H04W 4/46

(54) **INTER USER COORDINATION AND ASSISTANCE IN V2V COMMUNICATIONS**

(71) Applicant: Mitsubishi Electric R&D Centre Europe B.V., 1119 NS Schiphol Rijk Amsterdam (NL); Mitsubishi Electric Corporation, Tokyo 100-8310 (JP)
(72) Inventor: CIOCHINA, Cristina, 35708 Rennes Cedex 7 (FR); GRESSET, Nicolas, 35708 Rennes Cedex 7 (FR); SHEHATA, Mohamed, 35708 Rennes Cedex 7 (FR)
(74) Representative: Plasseraud IP

(57) **Abstract**

The disclosure relates to a method for providing assistance information on the quality of at least one communication channel between a first device and a target group of second devices in a device-to-device communication system.

Among the second devices of the target group, at least one candidate is selected (S3) based on at least one criterion related to a communication condition related to at least one second device of the target group.

At least one selected candidate transmits (S4) assistance information that is representative at least of the quality of the communication channel between the first device and said at least one candidate.

The disclosure further relates to corresponding communication systems, second devices, computer programs, computer-readable storage media and processing circuits.

## Description

### DOMAIN

The disclosure belongs to the field of telecommunications.

In particular, there are disclosed methods for providing assistance information to a first device sending data to a target group of second devices in a device-to-device communication system. There are further disclosed corresponding device-to-device communication systems, second devices of such systems, computer-readable storage media, computer programs and processing circuits.

### BACKGROUND

The framework of the present disclosure is to enhance the resource allocation in a device to device vehicular system. The invention is described in the framework of Mode 2(a) of 3GPP NR V2X, without being limited to this specific framework. V2X communication supports broadcast (one vehicle to all the surrounding vehicles), groupcast (one vehicle to a set of surrounding vehicles) and unicast (one vehicle to another vehicle) communication services. The present disclosure principally targets the groupcast and broadcast scenarios.

For the state-of-the-art scenario, the following 3GPP scenario is considered:
- the vehicles use the physical sidelink (PC 5 interface) channels for V2V communications.
- resource allocation is performed based on the 3GPP NR V2X mode 2 (a): the transmitter (TX) selects the resources autonomously based on local channel sensing information.

The main state-of-the-art blocks related to the present disclosure are now briefly explained to ensure a full understanding of the present context.

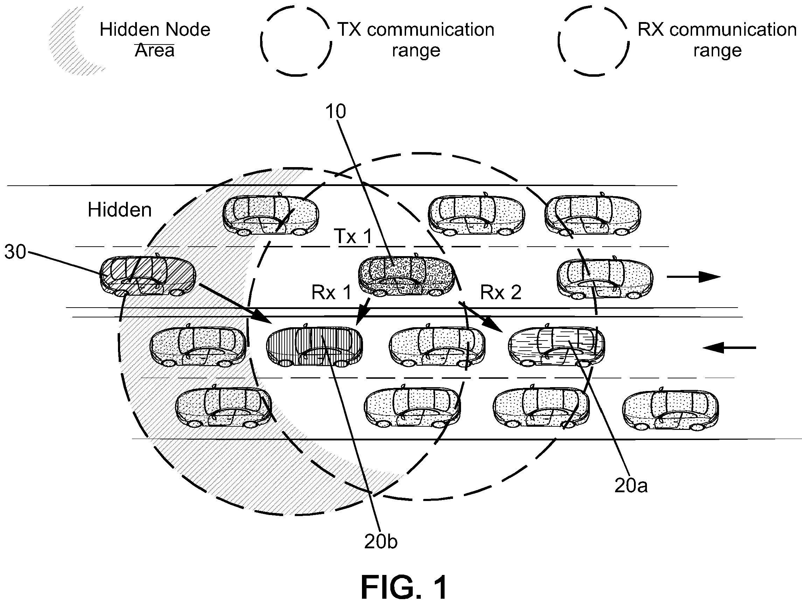

The hidden node problem is one of the main problems in sensing-based resource allocations such as 3GPP NR V2X mode 2 (a), as shown in Figure 1. In this example, it is considered that a transmitter TX (10) emits information throughout its own communication range, and that the emitted information is received by receivers RX (20a, 20b). The hidden node problem happens when some nodes (30) are within the sensing range of a given receiver RX (20b) but not in the sensing range of the transmitter TX (10). In this case, the TX may choose resources that are already used by the hidden nodes because it is not aware of them in its sensing procedure. In turn, this can lead to packet collisions at the RX side and thus performance degradation.

Some solutions have been recently proposed for the hidden node problem in unicast transmissions, and are disclosed in Intel, "RI-1812492:Further Considerations on Sidelink Unicast, Groupcast, and Broadcast Modes for NR V2X Communication" 3GPP RAN WG1 95, Spokane, USA, Nov. 2018 and in Vivo, "RI-1906139:Discussions on mode 2 resource allocation mechanism" 3GPP RAN WG1 97, Reno, USA, May 2019.

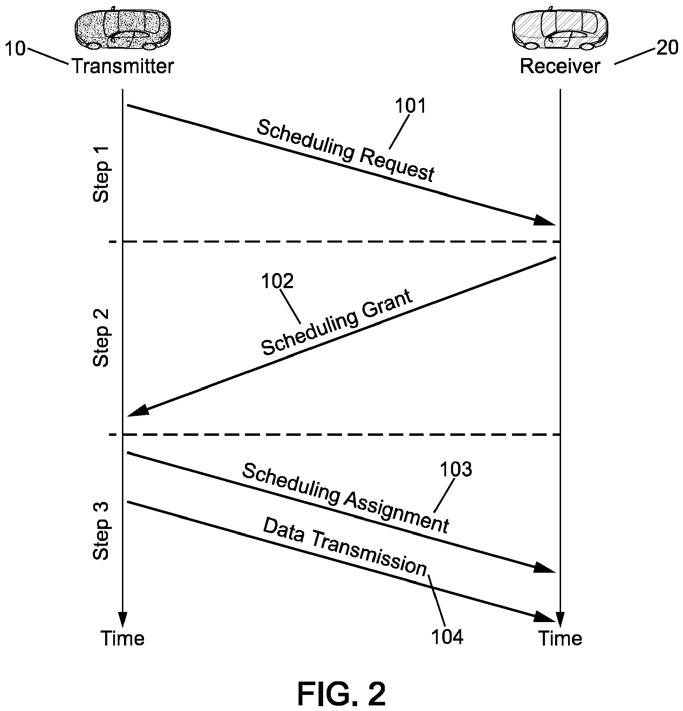

This is done by allowing the receiver to do the resource allocation based on their sensing information and then feedbacking this resource allocation decision to the transmitter using the same physical resources. The proposed mechanism is based on three steps, as illustrated in Figure 2, summarized as follows:
The first step is a scheduling request (101), the transmitter TX (10) asks the receiver RX (20a) for assistance information using a sidelink scheduling request (SR). This SR encompasses information related to the IDs, buffer state, resource allocation information, etc. The SR can also include information about the preferred resource for scheduling grant (SG) from the TX sensing information.
The next step is a scheduling grant (102). The RX responds with a SG signalling at least the preferable resources from its sensing information, to be used for data transmission.
The last step comprises a scheduling assignment (103) and proceeds with data transmission (104). The TX transmits scheduling assignment (SA) and Data to the RX, either using the transmission parameters from the SG allocated by the RX or using the SG as assistance information to make its own decision.

This mechanism requires a large number of overhead bits to feedback the Rx assistance. Thus, the proposed solution in the literature is only limited to unicast communications and cannot be extended in a straightforward manner to groupcast communications due to the large overhead and spectrum resources needed. Therefore, the hidden node problem for NR V2X mode 2 (a) is still left as an open problem that needs to be tackled.

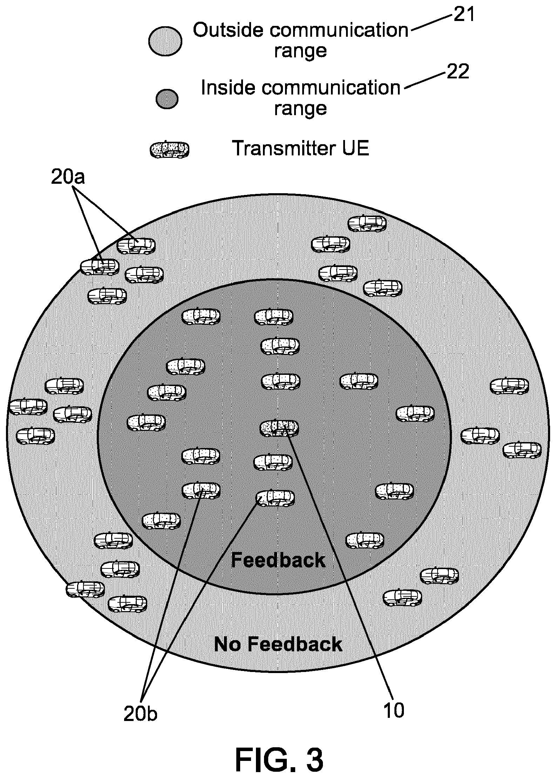

In release 16 of the 3GPP NR V2X mode 2 (a), there exists an option for hybrid automatic repeat request (HARQ) feedback mechanism for groupcast communications based on distance, called Distance-based HARQ feedback mechanism, illustrated in Figure 3. The Distance-based HARQ feedback mechanism is further detailed in Qualcomm, "R4-1913820: On NR V2X Distance-Based HARQ for Groupcast" 3GPP RAN WG4 93, Reno, USA, November 2019.

In this mechanism, the TX (10) sends its location information (zone ID) and its communication range in the sidelink control information (SCI). Then, the RXs (20a, 20b) decode this information and use it to know if they are within the communication range (21) of the TX or not. Then, as shown in Figure 3, for a RX (20a) in a geographical region being outside the communication range (21), no HARQ feedback is transmitted. However, for a RX (20b) in a geographical region inside the communication range (22), the behavior of the RX is as follows:
- if said RX is able to decode the SCI and also decode the corresponding transport block (TB) that carries the user information data packets, nothing should be sent (do not send an acknowledgment (ACK), stay silent), and
- if said RX is able to decode the SCI but unable to decode the corresponding TB, a non-acknowledgment (NACK) is sent back to the TX as a feedback to ask for a retransmission.

The main goal of this mechanism is to decrease the number of RXs that send feedback information to the TX, due to the scarcity of spectrum resources used to multiplex the HARQ feedback. Even though the HARQ feedback ACK/NACK reports need only 1 bit, large number of vehicles within a group can lead to a severe problem in multiplexing the feedback reports from all the RX vehicles. Therefore, this solution has been proposed to decrease the number of vehicles that need to send HARQ feedback information by selecting the most pertinent ones for giving HARQ feedback (the closest ones, since their impact on security is potentially higher).

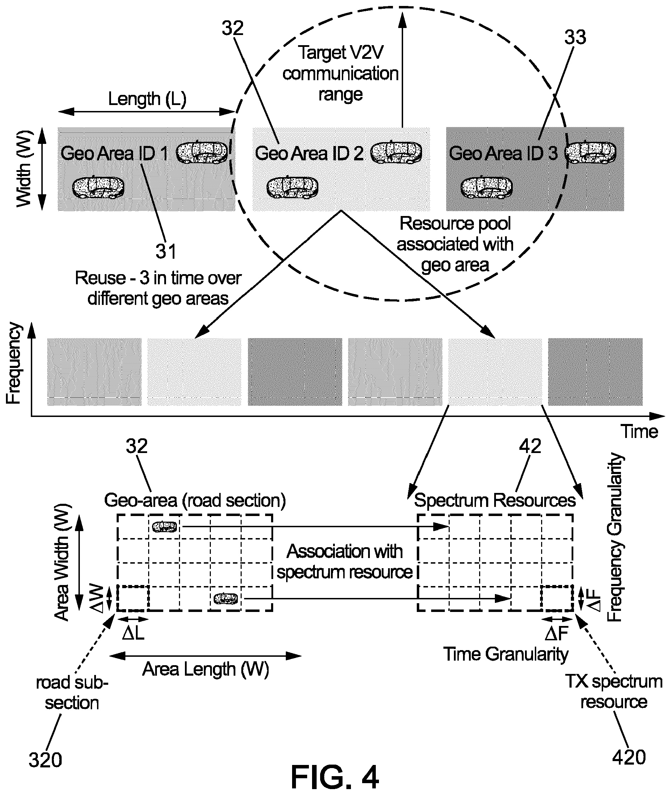

At the beginning of the proposals for 3GPP NR mode 2 (a) resource allocation, a solution for autonomous resource allocation in V2V without relying on sensing has been proposed. This solution is based on dividing the resource pool into multiple spectrum chunks (mini resource pools) and assigning them to neighboring geographical areas (31, 32, 33) as illustrated in Figure 4. Then, within each geographical area, it is divided in sub zones (320) with smaller dimensions (such that each sub zone area can have roughly one vehicle). Furthermore, these subzones (320) are assigned to separate transmit resources (420) from the mini resource pool (42) corresponding to the given geographical area. The whole procedure is summarized in Figure 4 and is explained in more details in Intel, "R1-160431: Support of geo-based transmission schemes for V2V communication" 3GPP RAN WG1 84, St Julian's, Malta, February 2016.

This geographical (zoning) based resource allocation ensures collision free transmission in a distributed manner for V2V communications without the need for sensing. Thus, it can be seen as a power efficient mechanism, yet it is a resource inefficient one, because it can lead to massive resource waste if the density of vehicles is small in a given geographical area. In such a case, a vehicle will use a small portion from the spectrum allocated to its geographical area, even if no other users exist to use the rest of the portions of the spectrum.

### SUMMARY

The invention is defined by the appended independent claims. Additional features and advantages of the concepts herein disclosed are set forth in the description which follows.

An objective of the present invention is to overcome the above limitations.

Here is thus disclosed a method for providing assistance information on the quality of at least one communication channel between a first device and a target group of second devices in a device-to-device communication system, the method comprising:
- selecting, among the second devices of the target group, at least one candidate based on at least one criterion related to a communication condition related to at least one device among the second devices of the target group, and
- for at least one selected candidate, transmitting assistance information to the first device, said assistance information being representative at least of the quality of the communication channel between the first device and said at least one candidate.

By "communication channel" is understood a channel allowing communication between one or more emitters and a plurality of receivers. The first device may comprise at least an emitter module, hereafter also referred to as "emitter", and the target group of second devices may each comprise at least a receiver module, hereafter also referred to as "receiver".

The disclosed method allows providing accurate assistance information to an emitter in broadcast or groupcast communication services in order to solve the hidden node problem with minimal resource usage.

More precisely, providing assistance information to the emitter allows addressing the hidden node problem for groupcast or multicast scenarios.

Moreover, transmitting the assistance information from a limited number of selected candidates rather than from all receivers allows accounting for limitations that may be inherent to the communication system or that may be imposed by standards. For example, the 3GPP standards for V2V communication systems includes constraints on the overhead and spectrum scarcity.

The invention is thus applicable to V2V communications, and more particularly to NR 3GPP V2X.

Furthermore, selecting the at least one candidate based on at least one criterion related to a communication condition allows for an optimized accuracy and for a minimized redundancy of the assistance information to be transmitted to the emitter.

Examples of downstream applications, corresponding to actions that may be taken once the emitter has received the assistance information, are provided below.

The first device may be configured, for instance by allocating transmission channels, according to the assistance information in order to send data to the target group of second devices.

A quality of service may be determined based on the assistance information, then the determined quality of service may for example be compared to a threshold. Based on the result of the comparison, it is possible, for instance, either to proceed with sending data using the device-to-device communication system if the quality of service is deemed sufficient or to switch to another available communication system if the quality of service is considered to be too degraded.

By "communication condition" is understood any condition that may have an impact on the quality of communication between the first device and one or more second devices of the target group of second devices using the communication channel.

Such communication condition may be obtainable by various means. In a particular example, such communication condition, for instance, may be obtained based on an information having been received by a second device. For example, such communication condition may be obtained from the first device, from one or more second devices of the target group, and/or from a remote entity different from the first device and from the second devices. Such communication condition may be obtained by using the communication channel, by using a different communication channel, or may be preset locally.

Examples of a communication condition obtained based on an information having been transmitted by the first device to a second device, may include the communication condition:
- being received as part of the information emitted by the first device, or
- being determined, or computed, based on at least part of the information emitted by the first device, or
- being obtained from any entity (first device, second device, remote network entity) upon receiving the information emitted by the first device, in which case receiving said information may be merely used as a functional trigger for either determining or requesting the communication condition.

Examples of how the communication condition may be determined are provided below.

For example, said communication condition may be determined locally at a second device.

Alternately, said communication condition may be preset, for example built-in according to a given standard, and available to the second device.

Alternately, said communication condition may be determined remotely at the first device, or at a remote network entity, such as a base station or another entity locally implementing a network service, such as a multiple access edge computing node (MEC). After being determined, said communication condition may then be transmitted, or be made available, to the second device.

By "quality of the communication channel" may be understood a degree of availability of a network resource, such as whether said resource is available or not, or such as a level of interference, or such as a signal-to-noise ratio. Interferences may be caused, for instance, by the presence of hidden nodes emitting using the same resources or by environmental conditions impacting signal propagation.

By "network resource" is understood any subdivision of a communication channel used by the first device to send data. Network resources may be for instance time-frequency resources, corresponding to sending data during specific time intervals at specific frequencies. Network resources may further include a spatial component and/or an orthogonal code or a polarization component, may further correspond to specific protocols, or may exhibit any other intrinsic feature known to the person of ordinary skill in the art to identify each of them.

The assistance information, representative of the quality of the communication channel, may for example be used by the first device to optimize communication using the device-to-device communication system. For example, based on such indications, the first device may assess and allocate the best available time-frequency resources, and/or may exclude and unallocate other time-frequency resources that are already used by hidden nodes.

Such indications may for example be used by the first device to monitor a level of congestion of the device-to-device communication system and take appropriate actions when the level of congestion is too high compared to a predetermined threshold. Examples of such actions may include emitting an alert through for instance visual, audio and/or electromagnetic signals. Examples of such actions may further include stopping emitting using the device-to-device communication system and/or automatically deploying, or switching to, a parallel communication system.

In an example, the quality relates at least to a network resource of said communication channel, said network resource having not been used for sending data from the first device to the target group of second devices.

This may allow, for example, providing to the first device an indication about whether a potential network resource, that was not originally used by the first device for an initial transmission using the communication channel, may or not be further used for a retransmission.

In an example, the assistance information is composed of more than one bit.

By only allowing a limited number of candidates to transmit assistance information, some candidates, or each candidate, may be allowed to transmit a substantive amount of assistance information, such as two bits or more, possibly tens of bits when useful, in order to best inform the first device about the overall quality of at least one communication channel.

In an example,
- the communication condition comprises a packet priority level, respectively associated to each second device of the target group by a multiple access edge computing device, and
- at least one criterion related to the or each determined communication condition is further based on the respective packet priority levels.

MEC devices allow locally implementing a network service through a communication system in which specific time intervals may be respectively allocated to different types of communication with respective devices through predefined packet priority levels.

The packet priority level is an example of a criterion allowing clustering receivers, for example according to their communication capabilities or to their needs, in order to provide the best assistance information to an emitter.

In an example, the method further comprises, for at least one second device of the target group, obtaining, based on an information having been received by said second device, the communication condition relating to said second device or to another second device of the target group. The communication condition may for example be emitted by another second device in the group. For example, the another second device, upon detecting errors in the reception of the packet from the transmitter, sends a NACK message to the transmitter, which is heard by the said second device. Based on detecting the existence of such NACK message, the said second device obtains the communication conditions relating to the another second device in the target group.

The communication condition may for example be emitted by the first device. Furthermore, the communication condition may be related to said second device. For example, the communication condition may be representative of a distance between the first device and the second device, said distance being computable based on the respective locations of the first device and of the second device. The location of the first device may be determined for example based on metadata emitted by the first device, while the location of the second device may be accessible to the second device through any known means such as geolocation sensors.

More generally, by "candidate" is understood a given second device of the target group which is selected as candidate for transmitting the assistance information to the first device.

Said given second device may be selected as candidate:
- based on at least one criterion related to a communication condition related to said given second device, and/or
- based on at least one criterion related to a communication condition related to another second device of the target group.

For example, the quality of the communication channel between the first device and the target group of second devices may be similar for every second device of a given subgroup. In this case, among said subgroup, a specific second device may be elected as a master device. The master device may then elect any other second device of such subgroup based on a communication condition related to the master device, and potentially further based on another criterion. The elected device may then be tasked to provide the assistance information to the first device.

In an example, the method further comprises, prior to selecting at least one candidate, obtaining a data packet sent by the first device to the target group of second devices, said data packet comprising a request for assistance information related to the second network resource. The data packet is herein referring to any transmission of an information message that can be carrying control information in a control-signaling format, or user information in a user data flow.

By doing so, the first device may inform the second devices of a given network resource to be sensed, so that at least one selected candidate may specifically provide, to the first device, assistance information representative of the quality of that given network resource. For example, the first device may request assistance information only related to time-domain resources it cannot sense itself (for example due to half-duplex constraints). For example, the communication condition includes a time of transmission used by the transmitter to send the data packet to the target group. In another example, the communication condition includes a time or a set of time indicators set by the transmitter, where the transmitter cannot or plans not performing sensing itself.

Another advantage related to such example is that the first device may ask assistance, specifically, to a device lying in a position the first device is heading to, in order to get an accurate prediction of the quality of the communication channel in the near future.

The assistance information may further indicate, besides the sensing information related to hidden nodes, a time of transmission between emission of information by the emitter and reception of said information by the receiver.

It may be beneficial to provide to the emitter, as part of the assistance information sent by the receiver, such time of transmission, particularly when the emitter has half duplex constraints. Indeed, in this specific case, a technical limitation of the emitter is that it is impossible to simultaneously transmit using given resources and sense said resources. As a result, the emitter has a sensing window restricted to specific time intervals.

In order to compensate this technical limitation, it is possible for the second device to indicate, as part of the assistance information to be emitted, sensing related assistance information, such as the above time of transmission, sensed at time intervals outside the sensing window of the first device

In an example, the communication condition is related to a distance between the first device and said second device, and selecting, among the second devices of the target group, at least one candidate comprises:
- clustering the second devices of the target group in a plurality of subgroups, each subgroup being associated to a respective geographical region, each subgroup being formed of the second devices distributed in the associated respective geographical region,
- selecting at least one subgroup based on at least one criterion related to the respective geographical regions, and
- selecting, from each of the at least one subgroup, at least one candidate based on at least one additional criterion.

Clustering devices based on their geographical position allows regrouping devices that are likely to be exposed to a similar electromagnetic field. Therefore, the assistance information that may be generated by the devices of a given cluster are likely to be similar.

Therefore, a possibility is to select one candidate among the devices of a given cluster. Then, if the devices of said cluster is susceptible to provide relevant assistance information with respect to a criterion related to the geographical region associated to said cluster, the selected candidate may emit assistance information, as a single report, representative of all devices of said cluster.

By doing so, it is possible to provide to the first device an efficient assistance information while using a limited number of communication channels.

In an example,
- the first device has an inner communication range extending around the first device,
- the first device further has an outer communication range extending from the inner communication range outwards,
- the information emitted by the first device and received by said second device comprises metadata related to a geographical location of the first device, and further indicating an extent of the inner and/or outer communication range, and
- selecting at least one subgroup comprises
   ∘ filtering the subgroups, based on the metadata, to preselect all subgroups associated to geographical zones overlapping with at least part of the outer communication range of the first device, then
   ∘ selecting at least one subgroup among the preselected subgroups.

In order to best inform the first device of the available communication channels in a groupcast or broadcast scenario (i.e. the channels that are not already used in emission by a hidden node), the devices that are to emit assistance information shall be selected such as they receive significant power from both the hidden node and first device, while the first device does not receive significant power from the hidden node. Thus, the second devices that are to emit assistance information are not close to the first device, i.e., they do not belong to an inner communication range extending around the first device.

In an example, the method further comprises associating to each candidate a respective time-frequency resource, and transmitting the generated assistance information to the first device is implemented, for each candidate, at the respective time-frequency resource associated to said candidate.

Although the available time-frequency resources may be scarce with regard to the number of second devices in the target group, it is possible to allocate to each candidate a respective time-frequency resource if the number of candidates is small enough.

By doing so, the first device may identify the source of a received assistance information based solely on the time-frequency resource which has been used to emit the assistance information. This simple identification method may generally allow minimizing overhead.

In an example, the information emitted by the first device and received by said second device comprises a payload,
- determining said communication condition comprises, at said second device, attempting at decoding the payload, and determining, as said communication condition, whether the attempt is successful or failed, and
- selecting, among the second devices of the target group, at least one candidate based on at least one criterion related to the or each determined communication condition comprises selecting the at least one candidate among the second devices having failed an attempt at decoding the payload.

In this example, whenever a second device would provide HARQ feedback by sending a NACK, said second device may be selected as candidate for sending assistance information.

Such criterion is based on detecting a disruption of a communication channel used by the emitter. This disruption may be due for example to the presence of a hidden node communicating using the same communication channel, or may be due to other local communication conditions inhibiting transmission using said communication channel.

In such a case, it may be relevant in order to avoid any further disruption to emit the assistance information towards the emitter by using a different communication channel, or even a different communication system, than the one originally used by the emitter.

In an example,
- the communication condition comprises a user identifier, respectively associated to each second device of the target group, and
- at least one criterion related to the or each determined communication condition is further based on the respective user identifiers.

Each user identifier may be associated, in a correspondence table, to specific information related to the communication conditions between an emitter and a respective receiver.

An example of candidate selection performed centrally by an emitter based on user identifiers is disclosed herein. If the correspondence table is available to the emitter, then a possibility is that the emitter is configured to emit information which includes a list of user identifiers, so as to specifically request, through the emitted information, which receivers are to be selected as candidates to generate assistance information.

In a more general example, at least one criterion related to the or each determined communication condition is determined by the first device, and the information emitted by the first device and received by said second device comprises metadata indicating said at least one determined criterion.

An example of candidate selection performed locally by each receiver based on user identifiers is disclosed herein. If the correspondence table is available to the receivers, then a possibility is that each receiver checks the correspondence table for its own communication conditions with the emitter, and based on these communication conditions, self-determine whether they are or not candidates to generate assistance information towards the emitter.

In a more general example, at least one criterion related to the or each determined communication condition is determined locally by each second device of the target group.

All the above examples describing how to select candidates may be performed sequentially through a multi-stage selection process where the number of candidates decreases at every stage.

In an example, selecting, among the second devices of the target group, at least one candidate based on at least one criterion related to the or each determined communication condition comprises:
- during a first selection stage, selecting a sub-group of second devices, and
- during a subsequent selection stage, selecting at least one candidate among the sub-group of second devices based on at least one criterion, related to the or each determined communication condition.

For example, a preselection may be based on a criterion related to geographical clustering and may result in a number of preselected candidates. Alternately, the preselection may be performed based on packet priority levels accessible to or from a MEC device and related to each respective second device.

Then a subsequent selection may be conducted among the preselected candidates based on a criterion related to HARQ feedback in order to obtain an even lower number of candidates.

Of course, all the above examples describing how to select candidates may alternately be combined.

For example, several pre-selections may each be conducted based on a single criterion. This results, in obtaining, after each conducted preselection, a corresponding list, or ranking, of preselected candidates according to a respective criterion.

Then, using for example a cost function balancing the relative importance of each criterion, it is possible to extract, from all the determined lists, a smaller combined, or aggregated, list of candidates for generating assistance information to the emitter.

There is also disclosed a device-to-device communication system, the system comprising a first device and a target group of second devices, wherein:
- the device-to-device communication system is configured for selecting, among the second devices of the target group, at least one candidate based on at least one criterion related to a communication condition related to at least one device among the second devices of the target group, and
- at least one selected candidate is further configured for transmitting assistance information to the first device, said assistance information being representative at least of the quality of the communication channel between the first device and said at least one candidate.

There is also disclosed a second device of the above device-to-device communication system.

There is also disclosed a computer-readable storage medium comprising instructions which, when executed by a processing unit, cause the processing unit to carry out any of the above methods.

There is also disclosed a computer program comprising one or more stored sequence/s of instructions that is accessible to a processing unit and which, when executed by the processing unit, causes the processing unit to carry out any of the above methods.

There is also disclosed a processing circuit equipped with a processing unit operably connected to a memory, the processing circuit being configured to carry out any of the above methods.

### BRIEF DESCRIPTION OF THE DRAWINGS

Figure 1 illustrates the known hidden node problem.
Figure 2 illustrates known unicast assistance framework.
Figure 3 illustrates known HARQ based feedback for groupcast.
Figure 4 illustrates known zoning-based resource allocation.
Figures 5 to 8, 9b and 10a to 14 all relate to the present disclosure and especially relate to various ways of selecting candidates, among receivers, for emitting assistance information towards a transmitter.

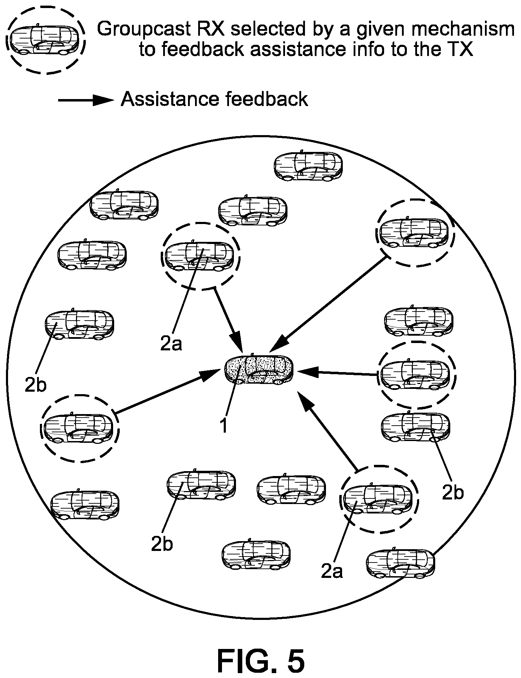

Figure 5 illustrates an example of a candidate selection according to a given mechanism.

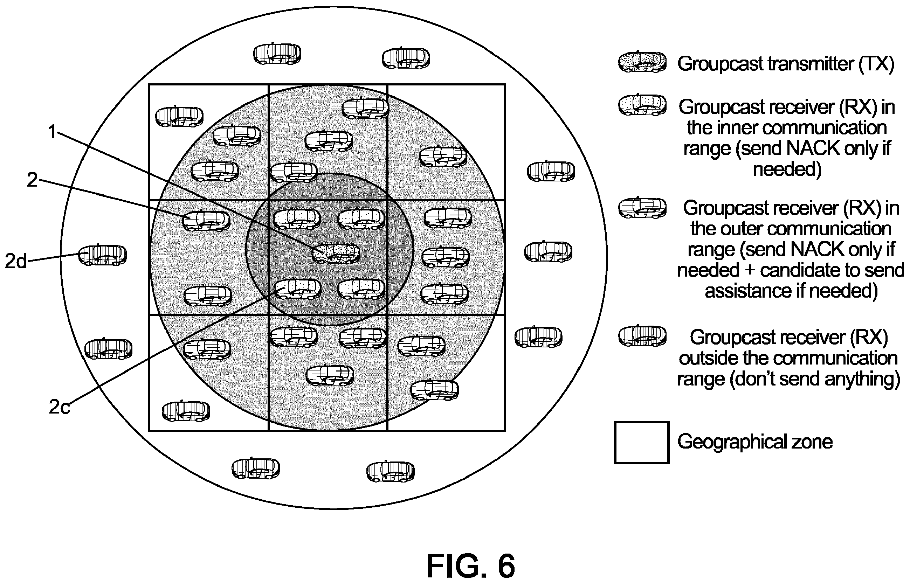

Figure 6 illustrates an example of a zoning-based candidate selection.

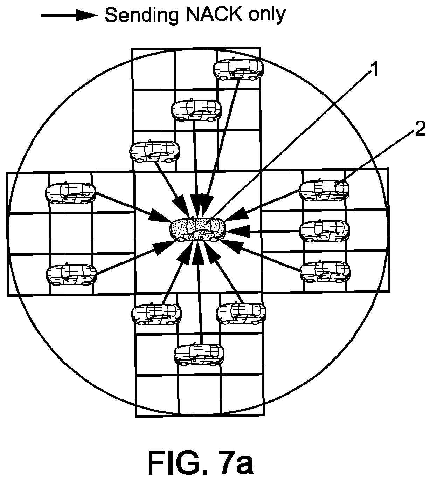

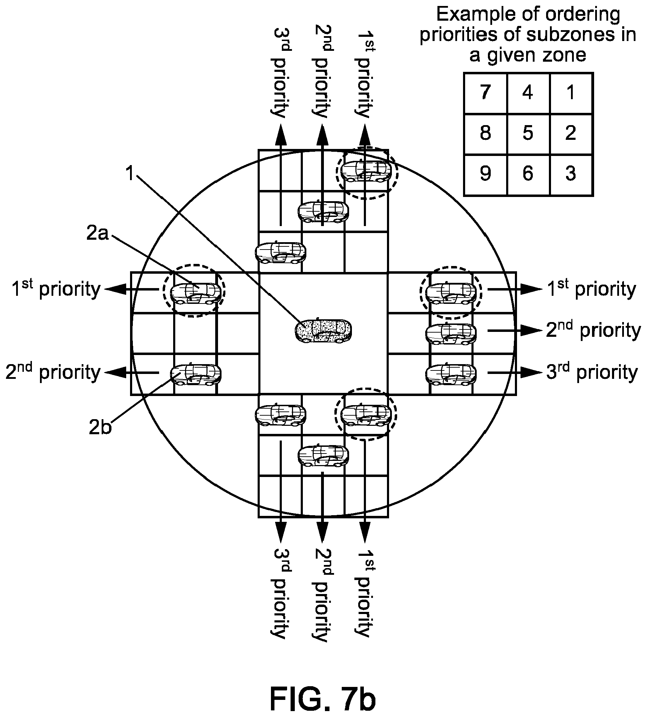

Figures 7a and 7b illustrate an example of candidate selection based on geographical zones and sub-zones.

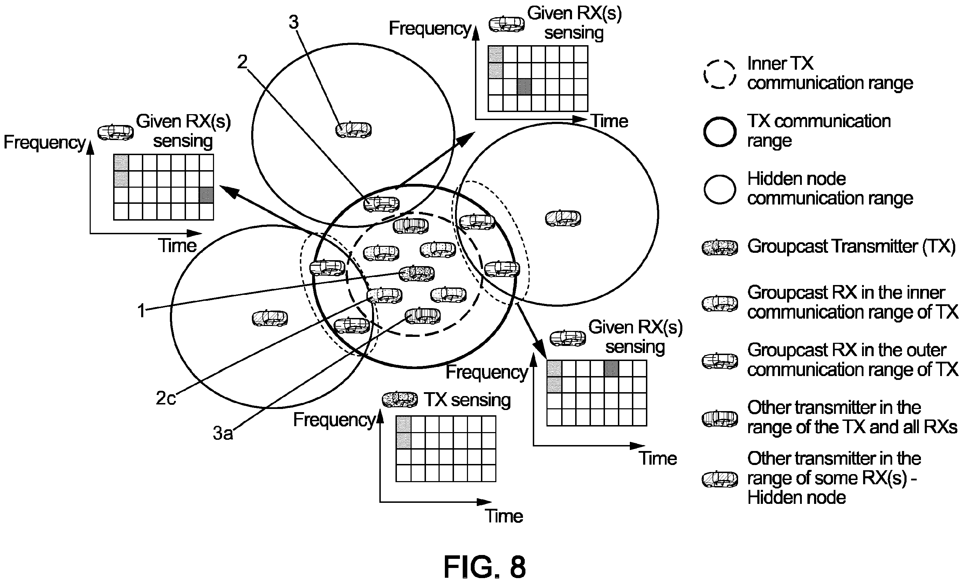

Figure 8 illustrates an example of candidate selection based on clustering receivers according to information related to quality of service or to network congestion.

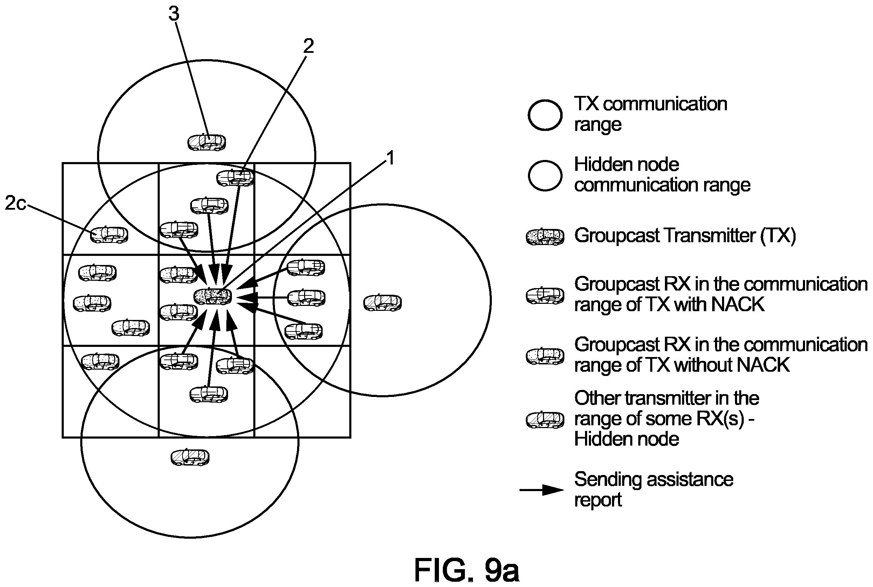

Figures 9a illustrates state-of-the-art assistance information.

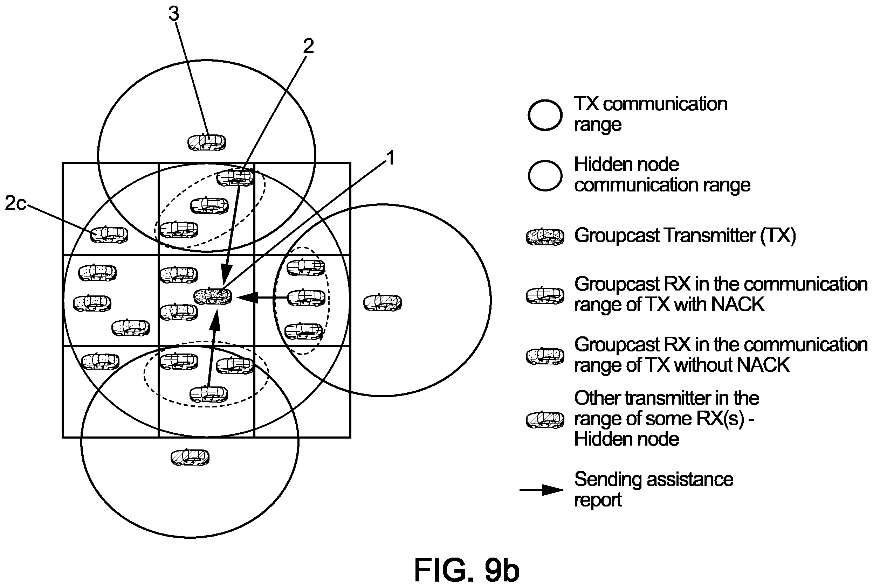

Figure 9b illustrates assistance information according to an example of the present disclosure.

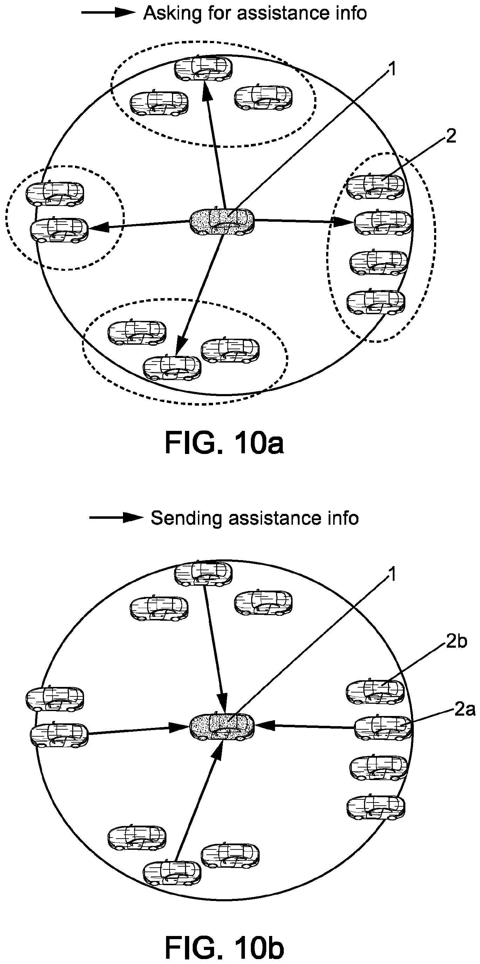

Figures 10a and 10b illustrate an example of transmitter-based assistance information in a groupcast scenario.

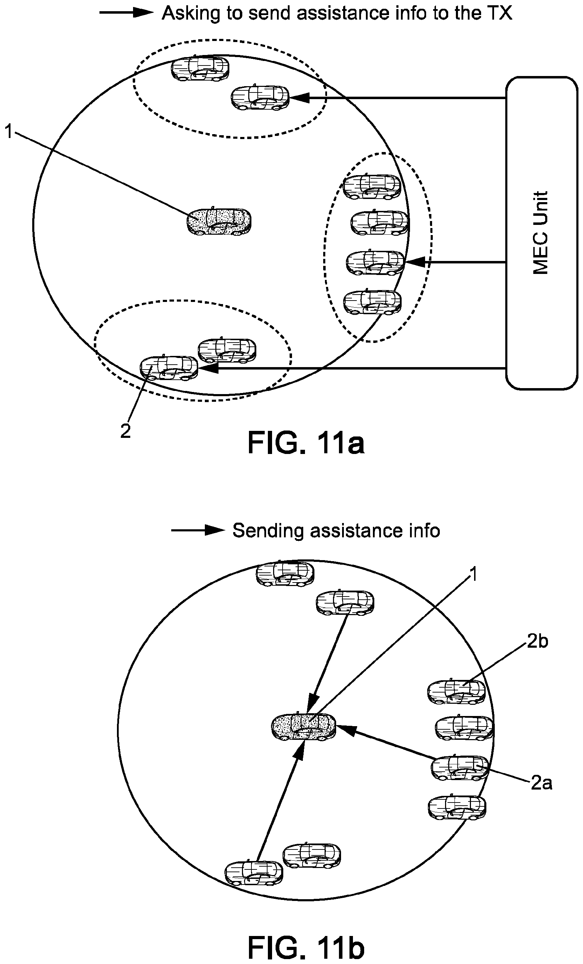

Figures 11a and 11b illustrate an example of a MEC-based assistance information in a groupcast scenario.

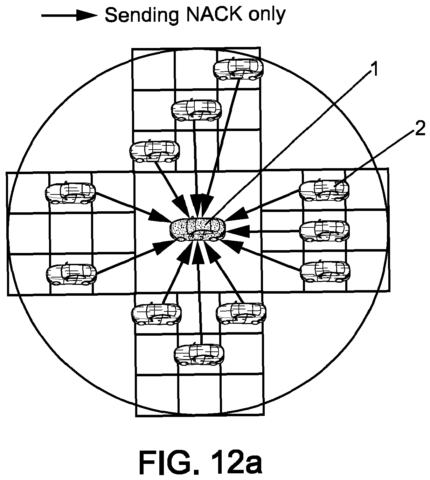

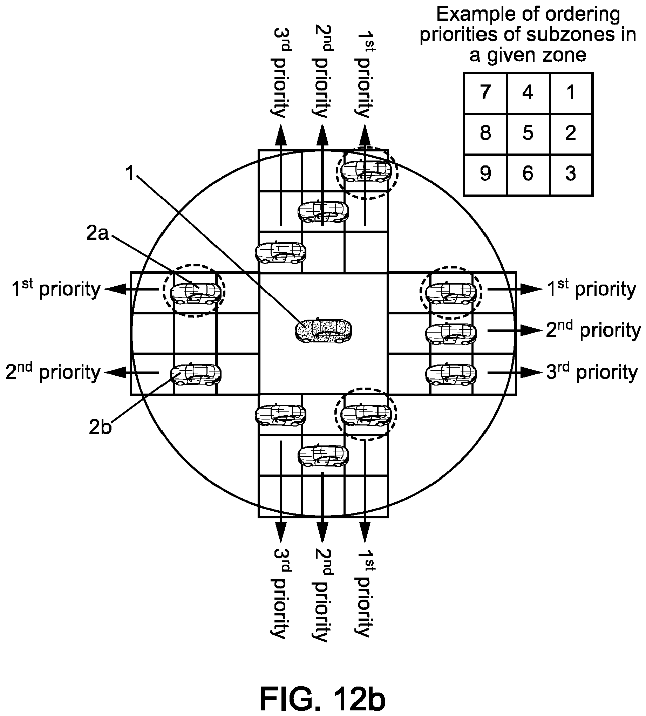

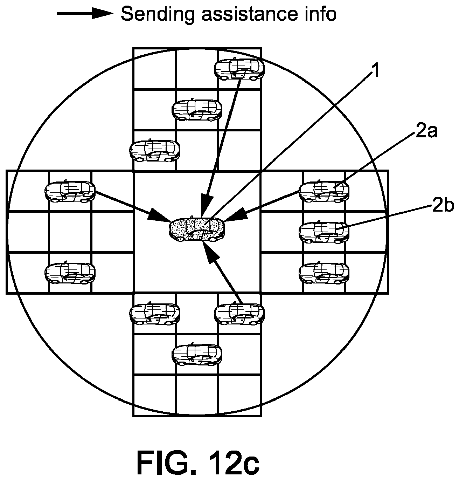

Figures 12a, 12b and 12c illustrate an example of a cooperative receiver decision-based assistance information in a groupcast scenario.

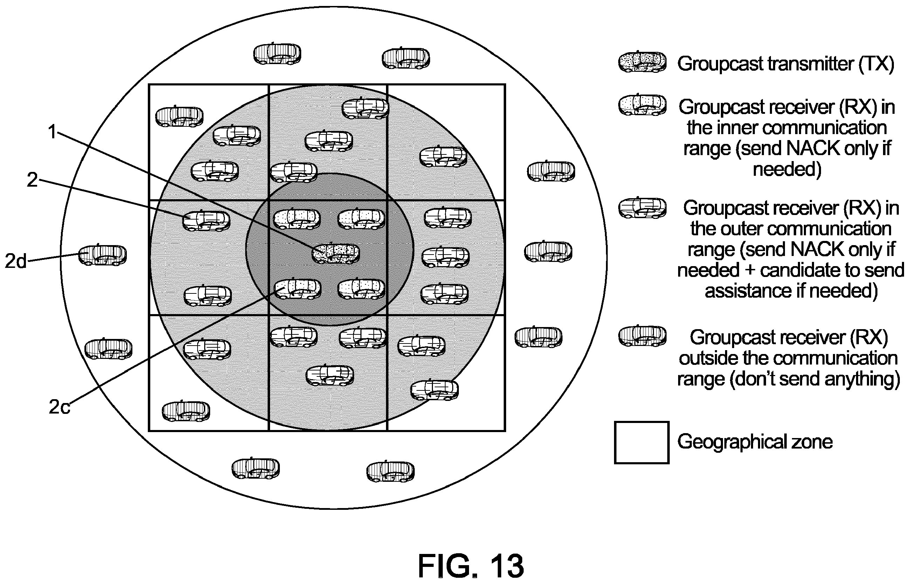

Figure 13 illustrates an example of a rough candidate selection based on distance in an example of multi-stage candidate selection.

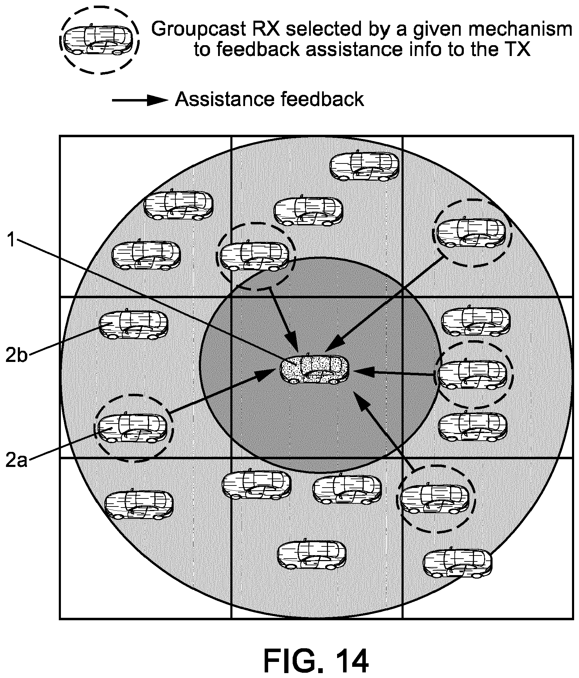

Figure 14 illustrates an example of a refined candidate selection based on distance in an example of multi-stage candidate selection.

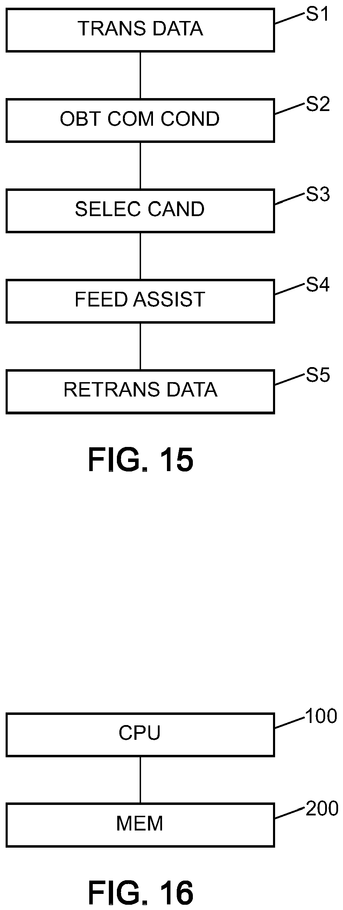

Figure 15 illustrates an example of a method for configuring a transmitter for sending data to a target group of receivers.
Figure 16 illustrates an example of a processing circuit configured to carry out the above method.

### DETAILED DESCRIPTION

The current state-of-the-art proposes an assistance aided resource allocation scheme in order to solve the hidden node problem. However, this scheme is limited to unicast transmissions only. Directly extending this scheme to groupcast is not possible under the current 3GPP overhead and spectrum constraints. Thus, a mechanism needs to be introduced in order to decrease the overhead and spectrum resources needed for transmitting assistance information from the RXs to the TX in groupcast communications.

A novel methodology is disclosed herein to select, within a group of vehicles, a limited number of candidate vehicles that are to be tasked for transmitting assistance information.

It is now referred to Figure 15, which illustrates an exemplary method of the present disclosure with respect to its context.

A transmitter TX (1) user equipment UE transmits data TRANS DATA (S1) to a target group of receiver RX (2) user equipments UEs. At this stage, it is unknown to the transmitter (1) whether or not each receiver (2) is able or not to successfully decode the data. Indeed, various interference sources, among which hidden nodes (3), in the environment of the transmitter or of the receiver may alter the propagation of the data.

For each of a plurality of receivers (2) of the target group, at least one communication condition is obtained OBT COM COND (S2) by one or more entities, which may include the transmitter (1), one or more receivers (2) or a remote entity such as a multiple-access edge computing node. The communication condition is related to a specific receiver at the time of the above data transmission. It may be related to a geographical location, to a software or hardware parameter, to an identifier, to a local environment, etc. which is related to the receiver.

The one or more entities then proceed to select SELEC CAND (S3) one or more candidate RX (2a) based on the obtained communication condition(s). Several examples presented thereafter describe in more detail how the candidate selection may be performed.

The or each candidate RX (2a) then transmits FEED ASSIST (S4) assistance information back to the TX (1). Thanks to the above selection, the number of candidates is minimized while allowing providing to the TX assistance information as rich and diverse as possible.

Based on the assistance information, the transmitter (1) may prepare an improved retransmission RETRANS DATA (S5) of the data for an improved reception by the receivers (2).

It is now referred to Figure 16, which depicts an example of a processing circuit configured to carry out the candidate selection of the above method. The processing circuit comprises a processor CPU (100) operably coupled to a memory MEM (200). The memory stores one or more sequences of instructions of a computer program. These one or more sequences are accessible to a processing unit and, when executed by the processing unit, cause the processing unit to carry out the candidate selection of the above method.

In the current (release 16) 3GPP NR V2X mode 2 (a), for groupcast communication services, there exists a HARQ feedback mechanism that requires HARQ feedback from a minimal number of vehicles in the group, selected on a distance-based criterion, to avoid resources congestion. This solution has been explained above. In this case, even though the feedback is just a single ACK/NACK bit, it has proved necessary to minimize the number of vehicles that send HARQ feedback.

Assistance information is intrinsically richer than simple ACK/NACK bits. For example, assistance information may be sensing reports consisting of tens of bits.

As a result, compared to the HARQ feedback mechanism above, even fewer vehicles should be tasked to transmit assistance information. However, it should be kept in mind that these reports should be diverse and sufficient for the transmitter to make an enhanced retransmission decision.

It is now referred to Figure 5, which depicts, in a groupcast or broadcast scenario, a selection of one or more RX to be tasked to transmit assistance information, wherein the selection is based on a given mechanism.

It is thus proposed a mechanism to decide whether or not to transmit assistance information from a given receiver RX (2), being part of a group of at least one RX(s), to a transmitter TX (1) in a device to device communication system.

The purpose is to select the most pertinent users for providing sensing information as assistance information, in order to get, at the transmitter, a global comprehensive picture of the hidden nodes while minimizing the resources used for getting such assistance information.

Different embodiments are proposed thereafter regarding RX selection and regarding selection of resources used for sending sensing information.

The RX selection is based on information relative to communication conditions between said TX and at least one member of said group (same or other than said given RX).

This selection is considered the core of this disclosure, and is explained in detail thereafter. The pool of RXs is used as an input. A refinement process is applied on the pool of RXs to choose a reduced number of RXs to transmit assistance information.

This candidate selection may be performed based on multiple submechanisms or subroutines (e.g. based on distance and zoning info, based on higher layers IDs, based on communication conditions, etc.).

Moreover, the decision-making may be implemented based on a centralized approach, or based on a distributed/autonomous approach or even based on a mixture of both.

More detailed explanations of possible mechanisms are provided thereafter with illustrative examples.

Details on assistance information are provided herein. The assistance information transmitted to the TX by a given RX(s) may be mainly based on the RX(s) sensing information. This may be achieved, for instance, by sending an assistance report that encloses the indices of a set of candidate time-frequency resources to obligatory select, or to obligatory avoid, or that are recommended to be selected or to be avoided.

In an example, assistance information may comprise a report of the best [X] resources sensed at the RX(s) side. Thus, the TX may identify, based on the assistance information from the selected RXs, averagely good resources that are fit for re-transmission. The chances of a successful retransmission are thus improved. This solution would be efficient in unicast scenarios, since in such a scenario there is only one RX. Thus, the TX can use the recommended resource(s) by this single RX for retransmission. However, such approach may be more complicated in a groupcast scenario where multiple selected RXs transmit assistance reports to the TX for retransmission. In this case, the assistance information from different selected RXs may include recommendations of different network resources. Thus it is then not clear for the TX how to satisfy all RXs in a single retransmission over one resource.

In an example, assistance information may comprise a report of the worst [X] resources sensed at the RX(s) side. Thus, the TX may discard, based on the assistance information from the selected RXs, resources unfit for re-transmission and thus improve the chances of successful retransmission onto resources not flagged as corrupted by hidden nodes. This kind of assistance information is more suitable for a groupcast scenario compared to the previous example. In this case, the worst X resources by different RX UEs may all be removed from the resource pool at the TX side and thus all RX UEs may be satisfied with a single retransmission over one of the remaining resources (that is not indicated as a worst resource by any of the RXs that sent assistance). Thus, it is clear that using RX sensing information as assistance to the TX may significantly help avoiding the hidden node problem and may improve performance in groupcast communications.

Details on communication conditions are provided herein. A reduced number of RXs to transmit assistance information is chosen out of the set of RXs that may receive information from the TXs. This selection may be done based on multiple criteria; each being related to a communication condition.

An example of criterion for selecting candidate RXs may be related to the TX-RX distance (e.g. zoning). Knowing the geographical zone of some of the RX, or of each RX, may be very beneficial to group the RXs into geographical clusters/subgroups in such a way that the RXs in the same zone form a cluster.

In such cluster, it is very probable that all the RXs will have similar, or highly correlated, sensing information. Therefore, one or few RX(s) assistance information transmitted per zone may provide as much relevant information to the TX as if all RX were to transmit assistance information.

To do so, it is possible to perform a distance-based RX UEs candidate selection.

A given RX may start checking if it is a candidate to send RX assistance to the TX or not by checking if it is inside the TX communication range or not. This may be done by using the own location of the RX as well as TX location information and communication range that are previously received from the TX (e.g. on the SCI) and decoded by the RX.

If a given RX satisfies this condition, then it is identified as a candidate RX for transmitting an assistance report to the TX. Thus, RX UEs having same sensing information as the TX UE (too close) or not being impacted by the events in the proximity of the TX UE (too far) may be discarded from the candidate pool, thus improving the reliability of the assistance information.

If this optional distance-based candidate selection is not implemented, then all RX UEs may be considered to be in the same, single cluster, or in the same, single geographical zone.

As a supplementary feature, the TX UE may set a minimum and/or a maximum distance for candidate selection, in order to improve the selection by better controlling the number of selected candidates.

As a supplementary feature, the TX may set a number of zones, possibly on top of setting a min/max distance). It is referred here to Figure 6, which depicts a zoning-based candidate selection.

In Figure 6, the TX (1) adjusts the minimum and maximum distances for candidate selection such that only the vehicles in the outer communication range are candidate RX (2) for sending assistance information. In turn only zones extending through the outer communication range are selected. In this example, 8 selected zones correspond to the outer communication range of the TX, these 8 selected zones surrounding a single, non-selected, zone corresponding to the inner communication range of the TX. The RXs located in the inner communication range are non-candidate RXs (2c) for having similar sensing information as the TX (1). The RXs located further than the outer communication ranger are also non-candidate RXs (2d) for not being sufficiently impacted by the events in the proximity of the TX (1).

Within each selected zone, one or few RX may be selected to transmit assistance information to the TX.

Another example of criterion for selecting candidate RXs may be related to NACK occurrence.

In 3GPP V2X unicast transmissions, HARQ feedback is based on sending an ACK to the TX if it correctly decoded the data and sending a NACK if not. However, in case of groupcast transmissions, the two following options currently exist:
- as a first option, each RX UE in the group sends an ACK to the TX if it correctly decoded the data and sends a NACK if not, and
- as a second option, only RX UEs that fail to decode the data send NACK to the TX, while no ACK needs to be sent by any RX

It may be observed that for groupcast transmissions, the second option is more efficient, since in this case for considering a retransmission, the TX only cares to know whether or not one or some RX(s) have sent a NACK, in order to determine whether a retransmission is needed or not.

Similarly, for sending RX assistance info to the TX in groupcast, it is only important to get assistance reports from RXs UEs that faced a difficulty in decoding the data (i.e. those RXs having sent NACKs). Indeed, assistance information from such RXs are likely to be the most helpful for determining how to select the most adequate network resource for a retransmission allowing such RXs to correctly decode the retransmitted data. Therefore, throughout the technical note, NACK occurrence is assumed to be a relevant criterion to determine whether or not a given RX UE is a candidate for sending assistance report to the TX.

For example, it is considered that, at a current instant, the transmitter TX (1) may receive NACKs from a plurality of RXs. By considering NACK occurrence as a criterion for selecting candidate RXs, all the RX having sent NACKs may thus be considered, in this case, candidate RXs (2).

The number of candidate RXs (2) may be further reduced based on another example of criterion for selecting candidate RXs, such as a criterion related to the position of said RX within a cluster. While knowing the zone information is important to group neighbouring candidate RXs into clusters, knowing the subzone information (i.e. the exact location of each RX inside a given geographical zone or among a given cluster of RXs) may be beneficial to select, or elect, which RX(s) of the cluster to task to send the assistance information.

A selection of candidate RXs, obtained for instance based on NACK occurrence as exposed above, may be refined to obtain a narrower list of candidate RXs to be tasked to send assistance information to the TX. For example, subzones within a zone may be ranked and an implicit or explicit mapping of zones to send resources may be predetermined. A single RX UE (2a) from each zone may be selected based on said mapping. The selected RX (2a) may then send assistance information at a given time and on a given frequency resource based on its priority order, while all other RX UE from said zone do not send any assistance information. Thus, collision among assistance information from different users is avoided. Thus, user selection may be done in an autonomous way.

It is now referred to Figures 7a and 7b, which depict an example of candidate selection based on NACK occurrence at one or more RXs.

In Figure 7a, four geographical zones are represented, each comprising nine geographical subzones represented as a 3x3 checkerboard pattern.

A TX (1) is represented in between all four zones, such that each of the four zones covers a different portion of the outer communication range of the TX (1). The TX sends data to a target group of RXs.

Some RXs (2) of the target group are represented in a respective subzone of one of the four zones.

For the sake of simplicity, it is considered that:
- only RXs having difficulties in decoding the data sent by the TX (1) are represented, and
- at most one RX may be located in each subzone.

Each RX having difficulties in decoding the data sent by the TX (2) sends a NACK to the TX (1) while also listening to other NACKs emitted by the other RXs located in the same zone.

For a given RX, knowing the number of NACK occurrences by other neighboring RXs (which, in this example, designate the RXs in the same geographical zone) may be helpful to decide whether it needs to send assistance or not based on its priority within the other RXs.

In Figure 7b, an example of ordering priorities of subzones in a given zone is represented as a predetermined mapping.

Following this mapping, each RX having sent a NACK may then determine:
- its own priority rank in the given zone,
- whether or not another RX, having a higher priority rank in the same zone, has also emitted a NACK,
- then transmitting assistance information only if no other RX having a higher priority rank in the same zone has also emitted a NACK.

By doing so:
- if no RX in a given zone have sent a NACK to the TX, no RX in the given zone may send assistance information to the TX,
- if a single RX in a given zone has sent a NACK to the TX, it may send assistance information to the TX, and
- if a plurality of RX (2) in a given zone have sent NACK to the TX, only a single one (2a) of them, having highest priority rank, may transmit assistance information to the TX (1).

NACK occurrence may be further used by the TX for the purpose of performing long-term statistics. Indeed, it may be beneficial at the TX side to observe the NACK arrivals on each feedback resource. In this case, if the TX observes a large number of NACKs arriving over the same resource, then it may be inferred that the RX using this resource for HARQ feedback needs help. In such a case, the TX may appoint this specific RX or another RX UE identified as having potentially related sensing information (e.g. another RX from the same zone) for assistance information. TX UE may also name a zone for which assistance information is needed and let the UEs in the zone autonomously determine which RX UE to give assistance information at which time.

Another example of criterion for selecting candidate RXs may be related to identifiers associated to a receiver or to a group of receivers. Each RX may have a unique identifier ID, such as a user identifier, an equipment identifier, or the like. Groups of RX may share an identical identifier which may be used for clustering. According to the seven-layer OSI model, identifiers may either be physical layer identifiers or higher layer identifiers. Identifiers may be used for networking, for example for communication between the TX and the RXs, or for multi-access edge computing. An ID of a RX or a group of RXs may be a relevant criterion in order to choose in a random or probabilistic way some RXs out of all candidate RXs to send assistance information. This may be done by applying a random process on the RX ID to check if this RX should send assistance information or not. For example, using the condition (MID mod 2 == 0), where MID is the higher layer ID of the RX UE, for deciding if a RX UE should send assistance information or not ensures that an average of 50% of RX UEs send assistance information. Similarly, using the condition (MID mod 4 == 0) ensures that an average of 25% of RX UEs send assistance information.

Another example of criterion for selecting candidate RXs may be related to quality of service (QoS) parameters such as latency, jitter, packet loss rate and the like, and/or to congestion information. The QoS and/or congestion information may be beneficial to cluster several RXs which are similar or correlated. Again, this may help dividing the candidate RXs set into multiple clusters, each with similar or highly correlated information. Thus, later only one RX per cluster may be selected to send assistance to the TX.

It is now referred to Figure 8 which depicts a QoS/congestion-based RX UEs clustering and selection. In this example, a transmitter TX (1) sends data to a target group of RX (2). Some RX (2c) of the target group are in the inner communication range of the TX (1) and are assumed to have similar sensing information to the TX (1). It is further considered that other transmitters (3) are present, either as hidden nodes that the TX (1) can't sense by itself, or as nodes (3a) in the communication range of the TX (1) and which may thus be sensed by the TX (1). Time-frequency sensing information are represented for various RXs or groups of RXs of the target group of RXs. At a given RX or group of RXs, each light grey square corresponds to a resource currently used by the TX (1) to send data. At a given RX or group of RXs, each dark grey square corresponds to a resource which may not be used by the TX (1) to send data since this would lead to significant interference at said given RX or group of RXs. It appears that RXs which are similarly exposed to the same hidden node (3) have a similar congestion level and similar interference characteristics. By exploiting such features for RX UEs clustering, one assistance report per cluster may be sufficient for the TX to be able to make an efficient decision for retransmission so as to avoid network resources used by hidden nodes.

Another example of data that may be included in the assistance information is the time of transmission of the data from the TX to the RX sending the assistance information. In particular, the TX may have half duplex constraints. In this specific case, the TX cannot sense resources while transmitting, which leads to holes in its sensing window. This may be compensated by one or more RXs providing assistance information to the TX including, besides the sensing information related to hidden nodes or interference, indications of a time of transmission in the times that the TX was not able to sense network resources. Thus, the TX may obtain sensing related assistance information filling the holes in its own sensing window. In order to provide diverse sensing related assistance information to the TX, time of transmission may be another example of criterion for clustering or for selecting candidates to be tasked to emit the assistance information.

It is clear that each of the above-mentioned criteria may be used either separately or in combination to enhance the selection decision of which RX should send assistance information to the TX. As the number of parameters used in the decision process increases, the decision is more optimal. However, this may also lead to an increase in the overhead required to carry such additional info and this may need more signalling either between the candidate RXs themselves or between the candidate RXs and the TX. As a general rule, signaling should be minimized in practical implementation scenarios such as the 3GPP NR V2X mode 2 (a).

A few examples are provided thereafter for using some of these parameters in either a centralized or a distributed way, in order to clarify the flexibility of the present disclosure and the trade-offs that may be captured.

Deciding whether or not to transmit assistance information from a given RX (or, in other words, the candidate selection mechanism) may be implemented by different network nodes, using either a centralized or a distributed approach.

For example, each given RX UE may decide for itself in an autonomous manner whether or not to send assistance information, without any input from the TX UE or from another RX UE; thus, a selection mechanism may be performed without extra signaling or delays. Examples may include decisions performed by each RX UE based on:
- its own location information (such as a location related to a zone or a subzone), and/or
- its own user equipment-specific information such as user equipment identifiers.

For example, each RX UE from a given cluster or group of RX UEs may decide in a distributed manner (i.e. based on a status of other RX UEs in the same group, or based on exchanges among RX UEs of the same group) which UE from the group is to be tasked to send assistance information at a given time; thus ensuring better selection compared to the previous example, since in such a case some sort of cooperation exists between the RX UEs and hence the decision to select/elect a given RX UE for sending assistance is based on cooperative information and is not a fully autonomous decision. Figure 7, presented above, depicts an illustrative example of an election process done between RX UEs located in the same cluster/zone based on either observing NACK from other RX UEs in the group or via local PC5 V2V exchanges in the cluster/zone.

For example, the TX UE may decide which RX UE(s) should send assistance and then informs those selected RX UE(s). This example may achieve a better selection compared to the previous examples, since in this case the solution is fully centralized, rather than fully distributed or semi-distributed. The TX may use any information or combination of information previously transmitted from all candidate RXs to the TX to select a subset of RX UEs to be tasked to send assistance information, in a centralized way based on aggregate information. The selection decision may be based, for example, on geographical information and/or on long-term statistics.

For example, each RX UE may decide whether to transmit assistance information based on assistance received from the TX UE. In this example, the decision at each UE is not fully autonomous, but rather based on additional information from the TX. This additional information, being an aid in decision-making, enhances the performance of the RX UEs selection to send assistance from a global point of view compared to a fully autonomous decision-making. For example, the TX may inform each RX UE about its probability of sending assistance based on its zone ID. Then, each RX UE may decide, based on its zone ID which is locally known by the RX and further based on the probability aid information sent by the TX for each zone ID, whether or not to send assistance information.

For example, RX UE may decide whether to send assistance information based on MEC assistance. A MEC device may act as a centralized unit, much like the TX may in the previous example, to select the RX UEs to be tasked to send assistance information or to help the candidate RX UEs decide themselves whether or not to send assistance information. The main advantage of using a MEC device rather than the TX for performing a centralized selection is that the signaling delay and the overhead are both reduced. Indeed, the network link between the RX UEs and the MEC device may be maintained independently from the link between the RX UEs and the TX. Thus, decision making at the MEC side may be done without waiting for an initial transmission from the TX to the RXs and without any further signaling exchanges.

A set of resources onto which the assistance report is to be sent may be selected among a broader set of available, or potentially available, network resources.

In the current release (Release 16) of 3GPP NR V2X, there exists two types of signals carried on two different channels for reports from the RX(s) to the TX in unicast and groupcast transmissions. These signals are the sidelink feedback control information (SFCI) carried on the physical sidelink feedback channel (PSFCH) and the channel state information reference signal (CSI-RS) carried on the physical sidelink shared channel (PSSCH).

In the present disclosure, assistance reports may be carried by a control channel such as PSFCH, with a new format depending on the number of bits to be transmitted. Indeed, the size of additional bits that need to be introduced is highly dependent on the size of the assistance information that are to be sent. For example the assistance info is mainly sensing related and may contain the indices of all, or a subset, of resources so as to indicate, by an appropriate convention, either that said resources are free or that said resources are busy. Therefore, based on the size of this assistance information, the number of bits may vary and thus different PSFCH sizes may be needed.

In the present disclosure, assistance reports may also be carried by a data channel. Currently CSI-RS only exists for unicast transmissions and thus it is fully assigned to one RX. In the present disclosure, it is proposed to extend the usage of CSI-RS carried on PSSCH to groupcast transmissions, since only a reduced number of RXs may be selected herein to send assistance information. Therefore, it is possible, using a suitable multiplexing scheme, to share the CSI-RS between the reduced number of selected RX UEs as explained thereafter.

In the present disclosure, assistance reports may also be carried using a combination of data and control channels. For instance, a given RX UE may inform the TX through the control channel that it is going to provide an assistance report using the data channel. For instance, a given RX UE may provide to the TX, through the control channel, an indication relating to which data channel resource(s) are going to be used to send said assistance report. Once the TX informed, the RX UE may proceed with sending the assistance report through said data channel.

The multiplexing of assistance reports may be clearly improved by the proposed ways of selecting the RXs to send said reports. Indeed, selecting a reduced number of RXs to transmit assistance reports clearly relaxes the spectrum and overhead constraints compared to the baseline case in the state of the art, where all RXs in the TX communication range and/or all RXs in the TX communication range with NACK occurrence need to send assistance reports. In order to clarify that gain, an example is given in Figures 9a and 9b.

Figure 9a depicts a state-of-the-art case. In this case, all the RXs (2) in the TX (1) communication range with NACK occurrence, for example due to the presence of a hidden node (3), also send an assistance report. The RXs (2c) in the TX (1) communication range without NACK occurrence do not send any assistance report. In this example, the decision on whether to send assistance or not is local at the RXs side. Resource multiplexing carries assistance based on RX higher layer ID. Thus, the resource grid is divided over the number of all RXs in the group, which leads to small resource blocks assigned to each RX that can carry few bits of assistance information. The assistance information transmitted by each RX is thus very limited.

Figure 9b depicts an exemplary case according to the present disclosure. If the candidate selection is centralized at the TX (1), which chooses the RXs (2) that are to send assistance information, then the resource grid may be divided only on the reduced number of selected RXs (2) that are to carry the assistance. This ensures that those RXs are assigned broader spectrum resources compared to the state-of-the-art case. Hence more assistance info may be transmitted by each selected RX and the spectrum is used in a more efficient way. In another example, RX election according to the present disclosure is applied in a distributed way. In this case, it is known that at maximum, one RX per zone in the TX communication range is to send assistance. Therefore, in this case the spectrum resources may be divided over the number of zones inside the TX transmission range (for example 8 zones in the scenario represented in Figure 9b). Even though this solution is not as spectral efficient as the centralized one, it is still much more spectral efficient compared to the state-of-the-art case. Indeed, typically, the number of zones in the TX range is much smaller than the number of the RXs in the TX range.

Resource selection for providing assistance information may be done in various manners.

For example, a frequency domain resource may be selected based on information relating to the zone or subzone where the RX that is to provide the assistance information is located. A single, or a limited number of RX UEs may send assistance information through such type of resource selection.

For example, a time domain resource may be selected, possibly within a pre-defined or configured time window after initial transmission, such that a larger number of RX UEs may successively send assistance information. The time slot allocated to a given RX for providing assistance information may be chosen based on a predetermined rule (e.g. based on zone or subzone) or may be a random selection such as based purely on probability, or based on a UE ID.

A combination of frequency, time and space domains multiplexing may be performed. For example, a frequency domain multiplexing may be performed based on zoning or based on another grouping criterion such as a service type or a priority type. This multiplexing allows allocating, for each cluster among the target group of RX, a respective frequency domain resource. Moreover, a time domain multiplexing may be performed to allocate, for each RX of a given cluster, a respective time domain resource. Therefore, each candidate RX may be allocated a single time-frequency network resource for an unequivocal identification by the TX.

In the following, different implementations are described in different scenarios.

In an exemplary embodiment, candidate selection for sending assistance information is implemented in, or assisted by, the TX. In a general manner, the TX sends an initial transmission based on its own sensing information only and receives NACK(s) feedback from users able to decode the control information but unable to decode the data part of the transmission. This may be done by all UEs, or by UEs under distance-based restrictions as described in the state of the art. The TX UE is thus able of gathering a certain number of sensing information to further determine the RX UEs who can provide the most beneficial assistance information. Such sensing information may include, for example, long term statistics on UEs having frequent and correlated NACK occurrence behavior and/or implicit or explicit information about RX UE location such as zoning information.

For example, the TX may decide that if the NACK occurrences of one UE are highly correlated to the NACK occurrences of another UE, it is only needed to get assistance from one of those two UE. Indeed, the correlation of the NACK occurrences most probably comes from the same factors having an impact on the quality of the radio link, and need to be reported only once for the two UEs. This may be extended to only one report for a group of UE, which have been clustered according to the correlation of their NACK occurrences.

In a specific example, NACK feedback may be multiplexed in the frequency domain based on zone. In other words, UEs in a given zone may each provide a NACK feedback in a specific frequency resource associated to their location. Thus, the resources used for NACK feedback by the RX UEs be representative of the location of a zone affected by a hidden node problem.

These elements constitute information related to communication conditions between said TX and at least one member of said group.

The TX UE may thus, based on this information, perform or assist the candidate selection by directly naming a UE or a group of UEs, either as part of the data initially transmitted or at a later stage (e.g. after having received HARQ feedback).

To do so, the TX UE may determine a specific RX UE to transmit assistance information. In this case, the selection decision is performed by the TX UE, and the selected RX UE is informed by the TX. The RX UE may be one of the UEs providing HARQ NACK, or may be another UE identified by the TX UE.

The TX UE may determine a group of UEs among which one or several RX UEs will provide assistance information; for example, the TX UE can indicate such a group by a group ID, by a zone ID, by a service type etc. If only one or some UEs from the named group are to provide assistance information, then the decision step may include a further sub-step of deciding, at the indicated RX UEs, which UEs to eventually select and task of transmitting assistance information. This refinement selection may for example be performed in a distributed manner among the group as described above. For instance, several/all UEs in the named group may provide assistance information, and those UEs may further perform a resource selection for providing assistance information (e.g. how to time/frequency domain multiplex different assistance reports as described above).

Figure 10 depicts a transmitter-based assistance information transmission in groupcast according to the example above. The TX (1) asks for assistance information by indicating, as part of its initial transmission, an identifier associated to the RX UEs of a given cluster (2). Then, one RX (2a) of said cluster is selected in an autonomous manner or in a distributed manner among said cluster. The selected RX (2a) sends the requested assistance information back to the TX (1) while the other RXs (2b) of the cluster do not send any assistance information.

In an optional implementation variant, deciding is determined by, or based on information received from, a MEC (mobile edge computing or multi-access edge computing) unit. In a general manner, packet priority as well as all other relevant information about the traffic of application packets, session parameters, quality of service, type of service, UE grouping per application type, etc can be controlled in a MEC node. The MEC node is thus able of gathering a certain number of information to determine or to assist in determining the RX UEs who may provide the most beneficial assistance information.

For example, it is possible to determine users or groups of users with a specific traffic priority, or having specific QoS demands, or having a specific location associated to a greater NACK prevalence. Assistance information from such users or groups of users is thus particularly useful for improving the overall network performance. In such cases, the MEC unit may intervene in the selection of the RXs which are to transmit assistance information.

In an example, only users designated by the application layer may be candidates to further candidate selection based on any of the methods described previously.

For example, only users designated by the application layer may send assistance information based on another trigger (e.g. NACK occurrence, etc).

For example, VRU (vulnerable road users) may always send assistance information, regardless of their ACK or NACK status, for safety purposes.

In an example users or groups of users may be determined based on an application dependent topology. Here, the MEC unit may intervene in defining the information relative to communication conditions upon which a selection, to be performed by another entity, is based. For example, let us assume that information relative to communication conditions consists at least in a number of zones and in a minimum-maximum distance with respect to TX UE for candidate selection. The number of zones may be determined in an application-dependent manner by the MEC unit. For example, for platooning applications, the MEC unit may decide to set the number of zones to 2 (face/rear) and the minimum/maximum distance dependent on highway communication range and user density. For example, for crossroad applications, the MEC unit may decide to set the number of zones to 8, respectively corresponding to each lane of the two crossing roads, by further taking into account the direction of vehicles towards/away from the crossing. The MEC unit may further set a minimum/maximum distance depending on urban scenario communication range and user density.

It is now referred to Figures 11a and 11b, which depict an example of a MEC-based assistance information transmission scheme in groupcast. The MEC unit identifies different RX clusters (2) in a TX (1) communication range and sends, to the RX of each cluster, a request to send assistance information to the TX (1). In each cluster (2), a selection of a single candidate RX (2a) is then performed, autonomously or in a distributed manner, such that the candidate RXs (2a) send the requested assistance information to the TX (1) while the other RXs do not send any assistance information to the TX (1).

In another implementation variant, the selection of the RXs that are to be tasked to transmit assistance information may be performed by the RXs in a fully distributed manner, without relying on any centralized unit (TX, MEC, etc.)

The TX sends the initial transmission based on its own sensing information only and then receives NACKs, similarly to the current 3GPP V2X mode 2 (a)).

Each RX locally obtains information related to communication conditions between the TX and said RX, for example the information may be related to distance, zoning, NACK occurrence, etc. A selection of candidate RXs is then implemented by the RX UE themselves based on a criterion related to the obtained information. As such, the selection may be distance-based, zoning-based, based on NACK occurrence, etc. As a result, assistance reports may be sent to the TX based on local binary decisions. These binary decisions are taken at each node separately, thus the candidate selection is fully distributed.

These binary decisions may depend on any local information available at each RX side. In a specific example, two criteria are used, related respectively to a higher layer ID and to a zone ID. For example, given that each RX node has a unique ID defined by higher layers for all RXs in the group, and given that multiple RXs in the same geographical zone share the same zone ID, using a combination of both zone ID (shared) and higher layer ID (unique) may be beneficial. The binary decision may thus, to some extent, ensure that the RXs that are to send the assistance report are spread within different zones, thus avoiding some redundancy and ensuring diversity of reports, to some extent. Although this approach does not lead to an optimal selection compared to the abovementioned centralized solutions, a clear advantage is obtained with respect to minimizing signaling and overhead between the RXs and the central unit.

It is now referred to Figures 12a, 12b and 12c, which depict an exemplary embodiment wherein a distributed RX based candidate selection relies on an election-based mechanism. The election is performed by a sub-group of RXs without intervention of a central unit. The election is a semi-distributed selection, rather than a fully distributed selection as in the previous example. The election is explained in more detail herein.

The TX (1) sends an initial transmission based on its own sensing information only and then waits for NACK(s) (similar to the current 3GPP V2X mode 2 (a)). The TX further defines a certain configuration for assigning time-frequency resources used to feedback the NACK. Time-frequency resource may be assigned to the RXs (2) of a target group, as known in the state-of-the-art, based on the geographical zone and subzone information associated to said RXs.

The RXs of the target group then try to decode the initial transmission. No action is then required from the RXs that correctly decode the message. On the contrary, the RXs that fail to decode the initial transmission need to autonomously check the distance-based restrictions for candidate selection. Then each RX that failed to decode the initial transmission and that is a potential candidate sends a NACK according to the given time-frequency resource locally determined based on its geographic zone and subzone indices. Assuming that the RXs have full duplex capabilities, each RX simultaneously listens to the other NACKs while sending their own NACK. Thus, each RX may know not only the number of RXs in the same zone that have sent a NACK, but also the position or subzone of said RXs in the same zone. This information is obtained just by listening to the time-frequency resources and translating them back to zone and subzone indices.

The TX receives the NACK from the receivers. In the meantime, the RXs that have sent the NACK further decide whether to send assistance information or not based on their position on the zone and the positions of the other RXs in the same zone with NACK. This may be done using a sub-zone priority map as shown in Figure 12b. In this way, the RX will know based on its subzone and the subzones of the other RXs in the same zone, if it has the highest priority (thus, being elected (2a) and sending assistance information) or not (thus, not being elected (2b) and not sending assistance).

The elected RX (2a) of each zone send the assistance information to the TX to help the TX choose the adequate network resource for a retransmission.

The election may be performed based on further D2D exchanges between users having identified each other as being part of the group. The election may be performed based on random selection of users having identified each other as being part of the group. The election may be replaced by a rule of resource selection for transmitting assistance information allowing e.g. all UEs to send assistance reports at different time/frequency slots.

It is now referred to Figures 13 and 14, which depict two successive stages of a mechanism for selecting RXs to send assistance information to a TX.

In this exemplary embodiment, it is considered that for a given RX to decide to provide assistance information, three conditions need to be satisfied as follows:
- the RX needs to be within the TX communication range
- the RX needs to be within the outer part of the TX communication range, and
- the RX needs to have an extra property or a specific priority over other neighboring or candidate RXs.

The first stage of the mechanism is a rough candidate selection based on distance depicted on Figure 13.

During this stage, a given RX (2) starts to check if it a candidate to send RX assistance to the TX (1) or not by first checking if is it inside the TX communication range or not. Then, the RX starts checking if it is in the outer range of the TX communication range or not, using its own location and the TX's zone information and the TX's communication range, already sent by the TX on the SCI and decoded by the RX. If a given RX satisfies these conditions, then it is declared as a candidate RX for sending an assistance report to the TX. Thus, this RX may be promoted to the second stage. The RXs (2d) outside the communication range of the TX (1) are excluded, as well as the RXs (2c) in the inner communication range of the TX (1).

The second stage is a refined candidate selection taking as input the RXs that survived the first stage. At the output of the second stage, a reduced number of RXs is selected to send assistance information. While in this example the first stage is distance-based and performed autonomously at each RX, the second stage may be performed based on multiple mechanisms (e.g. based on distance and zoning information, based on higher layers IDs, based on communication conditions, etc.). Moreover, the second stage may be performed based on a centralized approach, or based on a distributed or autonomous approach. Further steps of resource selection may be applied. For instance, the candidate users may use time domain multiplexing in order to send assistance info within a configured or pre-configured time lapse.

## Claims

1. A method for providing assistance information on the quality of at least one communication channel between a first device (1) and a target group of second devices (2) in a device-to-device communication system, the method comprising:
- selecting (S3), among the second devices (2) of the target group, at least one candidate (2a) based on at least one criterion related to a communication condition related to at least one device among the second devices of the target group (2a), and
- for at least one selected candidate (2a), transmitting (S4) assistance information to the first device (1), said assistance information being representative at least of the quality of the communication channel between the first device and said at least one candidate (2a).

2. The method according to claim 1, wherein the quality relates at least to a network resource of said communication channel, said network resource having not been used for sending data from the first device (1) to the target group of second devices.

3. The method according to claim 1 or 2, wherein the assistance information is composed of more than one bit.

4. The method according to any one of claims 1 to 3, wherein:
- the communication condition comprises a packet priority level, respectively associated to each second device (2) of the target group by a multiple access edge computing device, and
- at least one criterion related to the or each determined communication condition is further based on the respective packet priority levels.

5. The method according to any one of claims 1 to 4, further comprising, for at least one second device (2) of the target group, obtaining, based on an information having been received by said second device (2), the communication condition related to said at least one second device (2).

6. The method according to any one of claims 1 to 5, wherein the communication condition is related to a distance between the first device (1) and said second device (2), and selecting, among the second devices (2) of the target group, at least one candidate (2a) comprises:
- clustering the second devices (2) of the target group in a plurality of subgroups, each subgroup being associated to a respective geographical region, each subgroup being formed of the second devices distributed in the associated respective geographical region,
- selecting at least one subgroup based on at least one criterion related to the respective geographical regions, and
- selecting, from each of the at least one subgroup, at least one candidate (2a) based on at least one additional criterion.

7. The method according to any one of claims 1 to 6, wherein the information emitted by the first device (1) and received by said second device (2) comprises a payload,
- obtaining said communication condition comprises, at said second device (2), attempting at decoding the payload, and determining, as said communication condition, whether the attempt is successful or failed, and
- selecting, among the second devices (2) of the target group, at least one candidate (2a) based on at least one criterion related to the or each determined communication condition comprises selecting the at least one candidate (2a) among the second devices having failed an attempt at decoding the payload.

8. The method according to any one of claims 1 to 7, wherein:
- the communication condition comprises a user identifier, respectively associated to each second device of the target group, and
- at least one criterion related to the or each determined communication condition is further based on the respective user identifiers.

9. The method according to any one of claims 1 to 8, wherein at least one criterion related to the or each determined communication condition is determined by the first device (1), and the information emitted by the first device (1) and received by said second device (2) comprises metadata indicating said at least one determined criterion.

10. The method according to any one of claims 1 to 9, wherein at least one criterion related to the or each determined communication condition is determined locally by each second device (2) of the target group.

11. The method according to any one of claims 1 to 10, wherein selecting, among the second devices (2) of the target group, at least one candidate (1) based on at least one criterion related to the or each determined communication condition comprises:
- during a first selection stage, selecting a sub-group of second devices, and
- during a subsequent selection stage, selecting at least one candidate (2a) among the sub-group of second devices based on at least one criterion, related to the or each determined communication condition.

12. A device-to-device communication system, the system comprising a first device (1) and a target group of second devices (2), wherein:
- the device-to-device communication system is configured for selecting, among the second devices (2) of the target group, at least one candidate (2a) based on at least one criterion related to a communication condition related to at least one device of the target group,
- at least one selected candidate (2a) is further configured for transmitting assistance information to the first device (1), said assistance information being representative at least of the quality of the communication channel between the first device and said at least one candidate.

13. A second device (2) of the device-to-device communication system according to claim 12.

14. A computer program comprising one or more stored sequence/s of instructions that is accessible to a processing unit and which, when executed by the processing unit, causes the processing unit to carry out a method according to any of claims 1 to 11.

15. A processing circuit equipped with a processing unit operably connected to a memory, the processing circuit being configured to carry out a method according to any of claims 1 to 11.
